# EUROPEAN PATENT SPECIFICATION

(11) **EP 2 352 950 B1**
(45) Date of publication and mention of the grant of the patent: **21.05.2014**
(21) Application number: 09760992.9
(22) Date of filing: 03.11.2009
(51) Int. Cl.: B62J 6/00, B62J 6/02, F21V 33/00, G06F 21/78, F21Y 101/02, F21L 4/08, A44B 15/00

(54) **COMBINATION OF A LAMP AND A CHARGER**
KOMBINATION AUS EINER LAMPE UND EINEM LADEGERÄT
COMBINAISON D'UNE LAMPE ET D'UN CHARGEUR

(30) Priority: 03.11.2008 DK 200801511
(43) Date of publication of application: 10.08.2011
(73) Proprietor: Copenlight APS, 2450 Copenhagen SV (DK)
(72) Inventor: SAAD, Angelo Jihad, 2450 Copenhagen SV (DK); AKHUNDZADA, Hayat, 2650 Hvidovre (DK)
(74) Representative: Tonnesen, Bo
(86) International application number: PCT/IB2009/054878
(87) International publication number: WO 2010/061306

(56) References cited:
- WO-A1-00/46547
- DE-U1-202004 011 722
- US-A1- 2007 268 688

## Description

### FIELD OF THE INVENTION

The invention relates to the technical field of lamps having a light emitting source and built-in rechargeable batteries to be connected to a corresponding charger see DE 202004011722U, WO 00/46547 and US 2007/0268688 as examples.

### BACKGROUND OF THE INVENTION

Rechargeable lamps are known per se and they are used as e.g. bicycle lamps, headlamps and flashlights but the full range of use is really limited by imagination only

However, the major problem experienced by all users of lamps with batteries, rechargeable and non-rechargeable, are that batteries have to be charged before you begin your travel in order arrive safely at your destination.

No matter how much producers of non-rechargeable batteries advertise long operating hours and an almost unaffected discharge curve until the battery fails, they eventually will fail. Users do not usually dispose of batteries until they fail, and they do not usually carry spare batteries with them.

Rechargeable lamps usually require a charging gear with a charging circuit transforming 220V or 110V to about 5V, which is applied on the lamp in need of a recharge. Such charging gears normally have a very impractical shape and connecting cables, which does not encourage a travelling user to bring it along

Accordingly, there is a need for a rechargeable lamp and a matching charger, which are built in a compact manner, so that a user is encouraged to always bring the charger along.

### DISCLOSURE OF THE INVENTION

Said need is satisfied according to the invention by a combination of a battery charger and a self-contained lamp device having a built-in light-emitting source and a rechargeable battery, wherein the charger has connection means to receive power from power supply, and wherein the lamp device being provided with attachment means adapted to match a lamp holder of e.g. a bicycle, said attachment means further mate with surfaces of the charger, when the charger is assembled flush with the lamp device thereby establishing a cordless electric connection between the lamp device and the charger. The combination is in a chargeable mode when assembled, and in a light-emitting mode when disassembled.

In a preferred embodiment of the invention, a compact combination comprises two self-contained lamp devices aligned in flat surface contact with the charger Said lamp devices are advantageously positioned on opposite sides of the charger in interlocking engagement therewith, or both lamp devices are positioned on the same side of the charger in interlocking engagement therewith in order to obtain a slim "pocket-friendly" shape of the combination.

An advantageous solution to get easy access to electric power is obtained by the combination being connectable to a power source and by providing the charger with a preferably extendible USB connector to receive power from a USB-source on optional external equipment such as a PC or a USB-adapter plugged into an AC wall outlet. These are normal surrounding conditions for enough people to make the invention valuable.

An advantageous embodiment comprises a combination, wherein a lamp device is adapted to physically interconnect with the charger by having a profiled surface facing a surface of the charger with a corresponding profile, and wherein a cross section of the lamp profile has a C-shape capable of clamping onto a flat bicycle lamp holder or the like; the charger having protruding first contacts opposite corresponding second contacts retracted from the inner surfaces of the folded ends of the C-shape, thereby providing an electric connection between the first and second contacts.

The light-emitting source would preferably be any type of a diode e.g. an LED (Light-Emitting -Diode), an SMT (Surface Mount diode) etc.

In more details the combination has in each lamp device built-in light-emitting-diodes (LED) in a front surface of the lamp facing outwards from the charger, which serve to emit light when the combination is disassembled after being charged, and which serve as an indicator light for the battery charging state when the combination is assembled and the charger is connected to a USB power supply. The charger being part of the combination comprises individual charging circuits for lamp devices attached. Thereby a single USB-key transfers power to both circuits.

In an advantageous embodiment of the invention, a first lamp device comprises diodes emitting a white light, and a second lamp device comprises diodes emitting a red light in order to act as a proper set of bicycle head and tail lamps.

One lamp device can operate and be charged independently of the other if e.g. the white light has been used separately for finding the way while walking, and the charger can charge through either circuits or both.
Furthermore, there is no button to switch on and off the light, meaning that the combination must be assembled for the lamps to shut off. In this way, accidental switching on the lamp while in the pocket or in a bag is avoided.
In order to improve the likelihood of always remembering the charger and lamps, the charger is provided with an eyelet for fixing a key ring thereto. Keys are always needed and thus the presence of the combination is guaranteed.

In addition to serving as a key ring mount, the exposed surfaces of the combination can be used to advertise commercial signs or brands.

In certain cases it would be appropriate if the charger were provided with a non-volatile memory, which could contain valuable data or initiate a program giving information about the lamp and the way to treat it, or about the company delivering the lamp

### DESCRIPTION OF DRAWINGS

More details about the invention will be given below together with illustrative figures clarifying the inventive details.
Fig. 1a showing a combination according to one embodiment of the invention, having the lamp and charger in an assembled state, showing a key ring with keys attached to the eyelet of the combination,
Fig. 2 showing the combination in Fig. 1 as seen from above,
Fig. 3 showing one lamp device of the combination shown in Figs. 1-2,
Fig. 4 showing an isometric view of the charger with no lamps attached,
Fig. 5 showing an isometric view of the charger and a lamp device interlocked in flat surface contact,
Fig. 6 showing the lamp device in Fig. 3 seen from below,
Fig. 7 showing an exploded view of a second embodiment of the invention wherein the thickness of the combination is reduced,
Fig. 8 showing a combination of the components of Fig. 7, and
Fig. 9 showing a third embodiment of the invention, wherein embedding the charger further reduces the thickness of the combination; the four views are taken from each of the small sides of the combination and are not reproduced to scale.

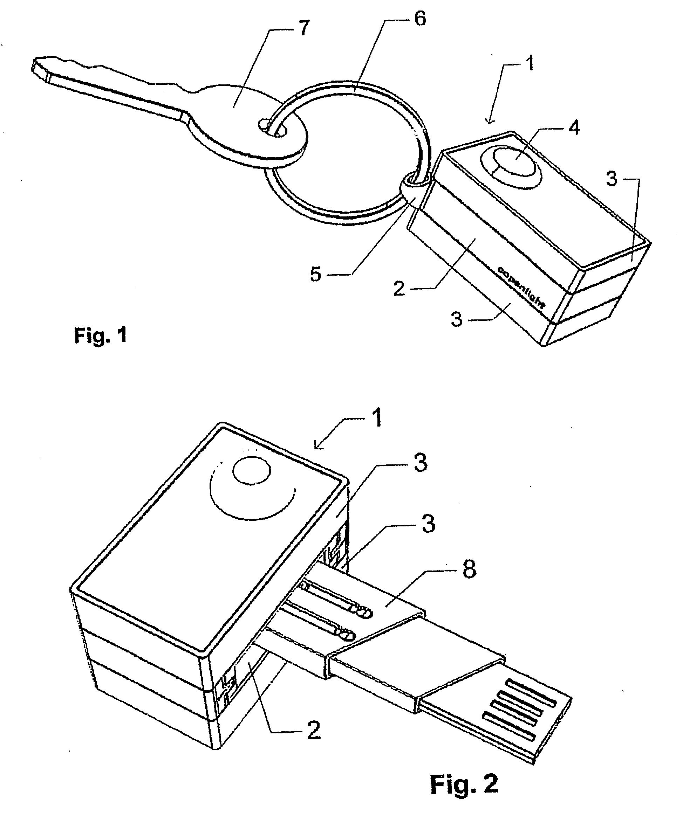

Fig 1 gives a clear overview of a combination 1 of a battery charger 2 and a self-contained lamp device 3 having a built-in light-emitting source 4 and hidden rechargeable batteries. Moreover, an eyelet 5 is formed on the charger 2 and a key ring 6 with a key 7 is attached thereto

Furthermore, Fig. 1 comprises not only one but two self-contained lamp devices 3 aligned in flat surface contact with the charger 2 in what was previously described as the assembled state.

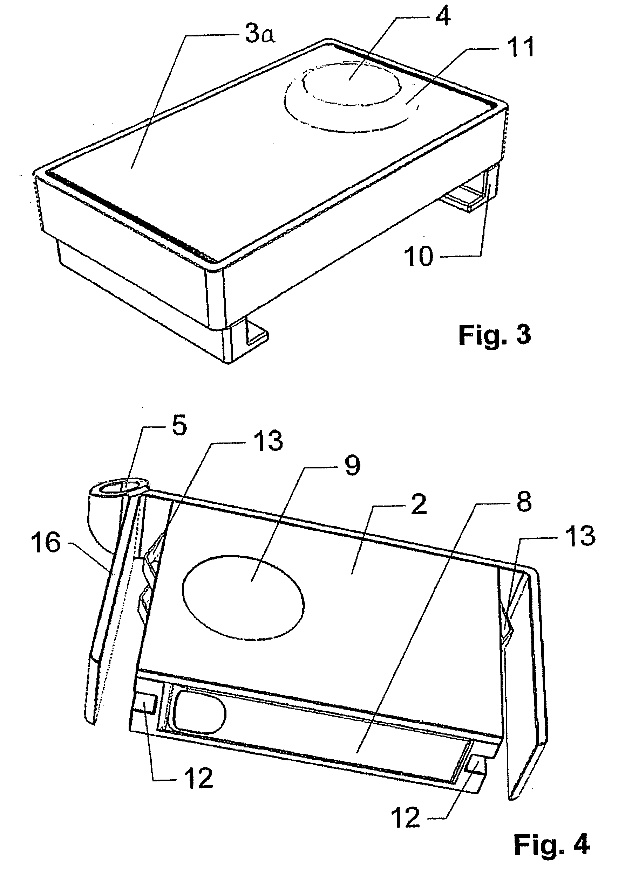

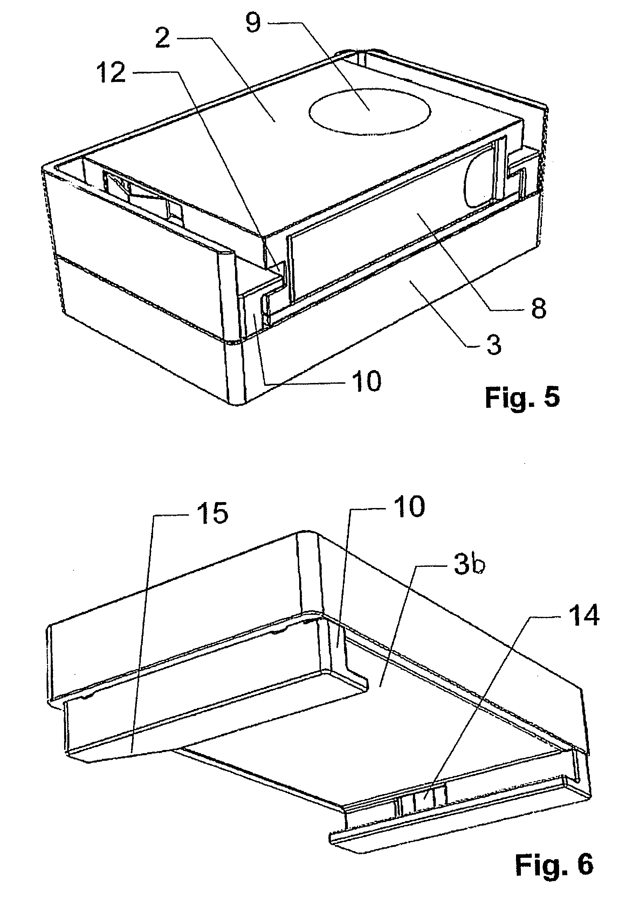

Fig. 2 shows the battery charger 2 having connection means in the form of a swing-out USB-key 8 extending laterally from the charger 2. The USB-key 8 has a fixed length of tongue or a telescopic length of tongue long enough to reach into a USB-source.
From Fig. 3 and Fig. 6 it is evident how the profiled back face 3b of the lamp 3 can cooperate with the charger 2 because it has a C-shaped cross-section, which can slide over a matching part of the charger 2. The C-shape consists of the back face 3b of the lamp 3 and L-shaped guides 10 at each side of said lamp 3. It should also be noted that one of the guides 10 is chamfered 15 at the free folded-over edge in order to secure a correct orientation of parts when assembled by meeting a mating edge.
Fig. 3 also gives a schematic view of the position of the light-emitting source 4 and the front face 3a of the lamp 3, said source 4 is surrounded by a coloured ring 11 indicating whether the lamp 3 emits a white light or a red light. The colour of the light-emitting source is detectable only when the light is turned on.

In Fig. 4 it is possible to see the configuration of the charger 2 having a U-shaped protecting wall 16 wherein the charger 2 along its one side is permanently fixed to the wall 16 while the two free ends of the wall 16 are kept at a defined distance from the charger 2 The charger presents electric contact surfaces 13 protruding into the space between the charger 2 and its free wall ends 16, respectively, whereby said surfaces 13 are protected by the wall ends 16.

In the actual embodiment there is a marking or circle 9 on the flat surfaces of the charger 2 indicating the required orientation of the lamps 3 in order to avoid short circuits. Furthermore, a swing-out USB-key 8 is in its retracted position inside the charger 2. Finally, grooves 12 are provided in the charger 2 facing each of the wall ends 16.

Fig 6 shows the L-shaped guides 10 at each end of the lamp 3 protecting electric contact surfaces hidden behind the guides 10.

In Fig. 5 a lamp device 3 has been interlocked with the charger 2, whereby each guide 10 has slid with its free L-shaped wall edge engaged in respective grooves 12 until the lamp 3 and the charger 2 come to full face contact. The next step before combining two lamps 3 and a charger 2 is to also orient the second lamp 3 relative to the marking 9 on the charger 2 and slide its guides 10 into the respective grooves 12 in the charger 2.

This is called the assembled state of the combination 1, wherein the lamps 3 have their electric contacts 14 brought into connection with the electric contacts 13 of the charger 2 ready for recharging. Here the combination 1 appears in its most compact shape to be comfortably carried in a pocket or bag.

When the combination 1 requires a recharge, the USB-key 8 is plugged into a USB-source on optional external equipment such as a PC or a USB-adapter plugged into an AC wall outlet.

When the lamps 3 are put into active use, the combination is disassembled, whereby the lamps 3 are separated from the charger 2, said lamps 3 will automatically emit light from the LEDs 4 in the correct colour until they are reassembled with the charger 2 and the light disappears.
Obviously, features like the configuration of the lamp glass regarding reflection, transparency, light intensity, curvature etc. and the position and/or choice of the light-emitting source 4 on the lamp body 3 do not influence the core invention.

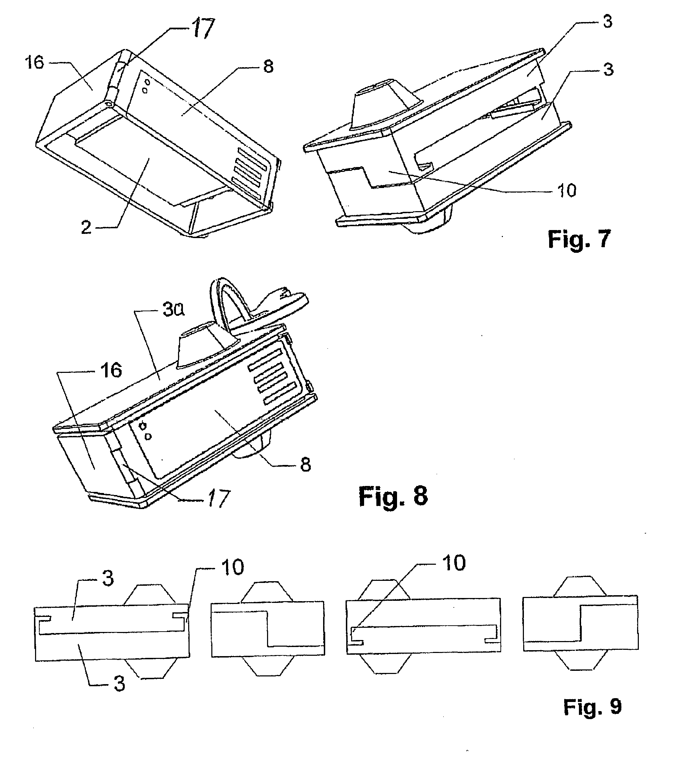

A second embodiment of the invention is presented in Fig. 7 wherein the lamps 3 are configured so that about half the length of the L-shaped walls 10 are cut away allowing nearing the back faces 3b of the lamps 3 to each other and reducing the thickness of the charger 2 as well. The offset positions of the guides 10 on opposite lamps 3 are possible only by applying a new configuration of the charger and the USB-key taking the form of an oblong door 8 hinged 17 along a short edge of the protecting wall 16 of the charger 2. In other words this means that, in use, the USB-key 8 is twisted 90° relative to its position in the first embodiment of Figs 1-6. The new configuration of the USB-key 8 gives an added benefit in the form of a sturdier look with no vulnerable openings as in the previous embodiment. In Fig. 8 a combination of the components of Fig. 7 is presented and the key ring is visible too.

According to a third embodiment of the invention presented in Fig 8 an even better reduction of the thickness of the combination 1 is obtained by having no separate charger positioned as a physical unit between the lamps 3 in the assembled state. Said lamps 3 being aligned in close surface contact with each other and having an embedded charging circuit, and a USB-key 8 configured as shown in Fig. 7 is provided to transfer power to said circuits. The electric contacts of the charging circuit and the lamp 3 are active, when two lamps 3 are assembled.

Further, as mentioned earlier, there are no other limits than the imagination for the use of this invention, and the inventor has in addition to the main use as bicycle lamps considered also use together with a dog leash, a perambulator, joggers or serious athletes to mention just a few.

Finally, the charger according to the invention could have an embedded memory acting like any normal USB memory stick to store data, or it could have a built-in program booting automatically when plugged into an active PC and displaying a user manual or a representation of facts about the company delivering the lamp combination. The outer surfaces of the combination are very useful for carrying commercial signs or logos.

## Claims

1. Combination (1) of a battery charger (2) and a self-contained lamp device (3) having a built-in light-emitting source (4) and a rechargeable battery, wherein the charger (2) has connection means (8) to receive power from a power supply, and wherein the lamp device (3) is provided with attachment means (10) adapted to be attached to a lamp holder of e.g. a bicycle, the attachment means (10) further mate with recess surfaces (12) of the charger (2) when the charger is assembled flush with the lamp device (3) thereby establishing cordless electric connection between electric contacts (14, 13) on the lamp device (3) and the charger (2), respectively; said combination (1) being in a chargeable mode when assembled and in a light-emitting mode when disassembled **characterised by** comprising two self-contained lamp devices (3) aligned in flush surface contact with the charger (2).

2. Combination according to claim 1, wherein the lamp devices (3) have their respective light-emitting sources (4) oriented in opposite directions away from the charger (2) in the assembled configuration.

3. Combination according to claim 1, wherein both lamp devices (3) have their light-emitting sources (4) oriented in the same direction away from the charger (2) in the assembled configuration.

4. Combination according to one of the previous claims, wherein the electric contacts (13) of the charger (2), in the assembled configuration, protrude towards and engage with the electric contacts (14) retracted into the inner surface of the attachments means (10).

5. Combination according to claim 1, wherein the charger (2) is provided with a preferably extendible USB key (8) to receive power from a USB source on optional external equipment such as a PC or a USB-adapter plugged into an AC wall outlet.

6. Combination according to any of the previous claims, wherein a lamp device (3) is adapted to physically interconnect with the charger (2) by having a profiled back face (3b) facing a surface of the charger (2) showing a mating profile, and wherein a cross section of the lamp profile has a C-shape capable of clamping onto a flat bicycle lamp holder or the like; the charger (2) having protruding first contacts (13) opposite corresponding second contacts (14) retracted from the inner surfaces of the folded ends of the C-shape, thereby providing an electric connection between the first and second contacts (13, 14).

7. Combination according to any of the previous claims, wherein the light-emitting source comprises built-in light-emitting-diodes (4) e.g. SMT or LEDs in a front surface (3a) of the lamp (3) facing outwards from the combination (1), which serve to emit light, when the combination (1) is disassembled, and serve as an indicator light for the battery charging state when the combination is assembled and the charger (2) is connected to a power supply.

8. Combination according to any of the previous claims, wherein the charger (2) comprises individual charging circuits for the lamp devices (3) attached.

9. Combination according to any of the previous claims, wherein a first lamp device (3) comprises diodes (4) emitting a white light, and a second lamp device (3) comprises diodes (4) emitting a red light in order to act as a proper set of bicycle head and tail lamps (3).

10. Combination according to any of the previous claims, wherein the diodes (4) in each lamp (3) are able to provide a different colour, light intensity and blinking speed indicating the charging status.

11. Combination according to any of the previous claims, wherein the length of the attachment means or guide (10) is half the height of a lamp device (3) so that the lamp devices (3) can slide smoothly along both flat surfaces of the charger (2) one after the other to the assembled state, and the USB key (8) taking the form of an oblong door hinged (17) along a short edge of the protecting wall (16) of the charger (2).

12. Combination according to any of claims 5-11, having the battery charger (2) and the two self-contained lamp devices (3) having built-in light-emitting sources (4) and a rechargeable battery, built-in light-emitting wherein the charger (2) has connection means (8) to receive power from a power supply, and wherein the lamp devices (3) are provided with attachment means (10) adapted to be attached to a lamp holder of e.g. a bicycle, **characterised in that** half the length of the attachment means or guide (10) on each lamp device (3) is cut-away such that the lamp devices (3) can slide into alignment in direct surface contact with each other and at least one of them having the charger (2) in the form of an embedded charging circuit and the USB key (8) taking the form of an oblong door hinged (17) along a short edge of one of the lamp devices.

13. Use of the combination according to any of the previous claims together with a key ring (6), wherein the combination (1) is provided with an eyelet (5) for said ring (6).

14. Use of the combination according to any of the previous claims wherein it is provided with a non-volatile memory.

## Patentansprüche

1. Kombination (1) aus einem Batterieladegerät (2) und einer selbstständigen Lampenvorrichtung (3) mit einer eingebauten lichtemittierenden Quelle (4) und einer wiederaufladebaren Batterie, wobei das Ladegerät (2) eine Anschlusseinrichtung (8) zum Empfangen von Energie von einer Stromversorgung aufweist, und wobei die Lampenvorrichtung (3) mit Befestigungseinrichtungen (10) versehen ist, die derart ausgelegt sind, um an einem Lampenhalter z.B. eines Fahrrads befestigt zu werden, wobei die Befestigungseinrichtungen (10) ferner an Ausnehmungsflächen (12) des Ladegeräts (2) anpassen, wenn das Ladegerät bündig mit der Lampenvorrichtung (3) montiert ist, wodurch eine drahtlose elektrische Verbindung zwischen elektrischen Kontakten (14, 13) an der Lampenvorrichtung (3) bzw. dem Ladegerät (2) hergestellt wird; wobei die Kombination (1) sich in einem wiederaufladbaren Modus befindet, wenn sie montiert ist, und in einem lichtemittierenden Modus, wenn sie demontiert ist, **dadurch gekennzeichnet, dass** sie zwei selbständige Lampenvorrichtungen (3) umfasst, die in bündigem Flächenkontakt mit dem Ladegerät (2) ausgerichtet sind.

2. Kombination nach Anspruch 1, wobei die Lampenvorrichtungen (3) ihre jeweiligen lichtemittierenden Quellen (4) in entgegengesetzten Richtungen weg vom Ladegerät (2) in der montierten Konfiguration orientiert haben.

3. Kombination nach Anspruch 1, wobei beide Lampenvorrichtungen (3) ihre lichtemittierenden Quellen (4) in der gleichen Richtung weg vom Ladegerät (2) in der montierten Konfiguration orientiert haben.

4. Kombination nach einem der vorhergehenden Ansprüche, wobei die elektrischen Kontakte (13) des Ladegeräts (2), in der montierten Konfiguration, zu den elektrischen Kontakten (14) hin vorstehen und mit ihnen eingreifen, welche in die Innenfläche der Befestigungseinrichtungen (10) zurückgezogen sind.

5. Kombination nach Anspruch 1, wobei das Ladegerät (2) mit einem bevorzugt erweiterbaren USB-Speicher (8) zum Empfangen von Energie von einer USB-Quelle an einer optionalen externen Ausstattung wie z.B. einem PC oder einem USB-Adapter versehen ist, welche an eine Wechselstromsteckdose angeschlossen ist.

6. Kombination nach einem der vorhergehenden Ansprüche, wobei eine Lampenvorrichtung (3) derart ausgelegt ist, dass sie durch eine profilierte Rückfläche (3b) mit dem Ladegerät (2) physisch verbunden ist, welche einer Oberfläche des Ladegeräts (2) zugewandt ist, die ein Paßprofil (10) darstellt, und wobei ein Querschnitt des Lampenprofils eine C-Form aufweist, die dazu imstande ist, sich auf einem ebenen Fahrradlampenhalter oder dergleichen festzuspannen, wobei das Ladegerät vorstehende erste Kontakte (13) gegenüber entsprechenden zweiten Kontakten (14) aufweist, die von den Innerflächen der gefalteten Enden der C-Form zurückgezogen sind, wodurch eine elektrische Verbindung zwischen dem ersten und dem zweiten Kontakt (13, 14) hergestellt wird.

7. Kombination nach einem der vorhergehenden Ansprüche, wobei die lichtemittierende Quelle eingebaute lichtemittierende Dioden (4) z.B. SMT oder LEDs in einer Vorderfläche (3a) der Lampe (3) umfasst, die nach außen von der Kombination (1) wegweist, welche dazu dienen, Licht zu emittieren, wenn die Kombination (1) demontiert ist, und als ein Anzeigelicht für den Batterieladezustand dienen, wenn die Kombination montiert ist, und das Ladegerät (2) mit einer Stromversorgung verbunden ist.

8. Kombination nach einem der vorhergehenden Ansprüche, wobei das Ladegerät (2) individuelle Ladeschaltungen für die befestigten Lampenvorrichtungen (3) umfasst.

9. Kombination nach einem der vorhergehenden Ansprüche, wobei eine erste Lampenvorrichtung (3) Dioden (4) umfasst, die ein weißes Licht emittieren, und eine zweite Lampenvorrichtung (4) Dioden (4) umfasst, die ein rotes Licht emittieren, um als ein echter Satz Fahrradvorder- und -rücklichte (3) aufzutreten.

10. Kombination nach einem der vorhergehenden Ansprüche, wobei die Dioden (4) in jeder Lampe dazu imstande sind, eine unterschiedliche Farbe, Lichtintensität und Blinkgeschwindigkeit bereitzustellen, welche den Ladezustand anzeigen.

11. Kombination nach einem der vorhergehenden Ansprüche, wobei die Länge der Befestigungsvorrichtungen oder der Führung (10) der Hälfte der Höhe einer Lampenvorrichtung (3) so entspricht, dass die Lampenvorrichtungen (3) die eine nach der anderen entlang der beiden ebenen Flächen des Ladegeräts (2) in den montierten Zustand zügig gleiten kann, und der USB-Speicher die Form einer an einer kurzen Kante der Schutzwand (16) des Ladegeräts (2) angelenkten länglichen Tür darstellt.

12. Kombination nach einem der Ansprüche 5-11 aus dem Batterieladegerät (2) und zwei selbstständigen Lampenvorrichtungen (3), welche eingebaute lichtemittierende Quellen (4) und eine wiederaufladebare Batterie aufweisen, wobei das Ladegerät (2) eine Anschlusseinrichtung (8) zum Empfangen von Energie von einer Stromversorgung aufweist, und wobei die Lampenvorrichtungen (3) mit Befestigungseinrichtungen (10) versehen sind, die derart ausgelegt sind, um an einem Lampenhalter z.B. eines Fahrrads befestigt zu werden, **dadurch gekennzeichnet, dass** die die Hälfte der Länge der Befestigungsvorrichtungen oder der Führung (1) an jeder Lampenvorrichtung (3) so weggeschnitten ist, dass die Lampenvorrichtungen (3) in Ausrichtung in direktem Flächenkontakt miteinander gleiten können, und wobei wenigstens eine davon das Ladegerät (2) in Form einer eingebetteten Ladeschaltung hat, und der USB-Speicher (8) die Form einer an einer kurzen Kante einer der Lampenvorrichtungen angelenkten länglichen Tür darstellt.

13. Verwendung der Kombination nach einem der vorhergehenden Ansprüche zusammen mit einem Schlüsselring (6), wobei die Kombination (1) mit einem Auge (5) für den Ring (6) versehen ist.

14. Verwendung der Kombination nach einem der vorhergehenden Ansprüche, wobei sie mit einem nichtflüchtigen Speicher versehen ist.

## Revendications

1. Combinaison (1) d'un chargeur de batterie (2) et un dispositif de lampe autonome (3) ayant une source émettrice de lumière incorporée (4) et une batterie rechargeable, dans laquelle le chargeur (2) a des moyens de connexion (8) pour recevoir de la puissance d'une alimentation électrique, et dans laquelle le dispositif de lampe (3) est fournie avec des moyens de fixation (10) adaptés à être fixés à une douille de lampe d'une bicyclette par exemple, les moyens de fixation (10) conjuguant en outre avec des surfaces avec des rainures (12) du chargeur (2) lorsque le chargeur est assemblé au niveau avec le dispositif de lampe (3), pour ainsi établir une connexion électrique sans fil entre les contacts électriques (14, 13) sur le dispositif de lampe (3) et le chargeur (2), respectivement; ladite combinaison (1) étant dans un mode chargeable lorsqu'elle est assemblée et dans un mode d'émission de lumière lorsqu'elle est démontée **caractérisée en ce qu'**elle comprend deux dispositifs de lampes autonomes (3) alignés en contact de surface au niveau avec le chargeur (2).

2. Combinaison selon la revendication 1, dans laquelle les dispositifs de lampes (3) ont leurs sources émettrices de lumière respectives (4) orientées dans des directions opposées à l'écart du chargeur (2) dans la configuration assemblée.

3. Combinaison selon la revendication 1, dans laquelle les deux dispositifs de lampes (3) ont leurs sources émettrices de lumière (4) orientées dans la même direction à l'écart du chargeur (2) dans la configuration assemblée.

4. Combinaison selon l'une des revendications précédentes, dans laquelle les contacts électriques (13) du chargeur (2), dans la configuration assemblée, portent en saillie vers les contacts électriques (14) et enclenchent avec ceux-ci, lesquels contacts électriques étant rentrés dans la surface intérieure des moyens de fixation (10).

5. Combinaison selon la revendication 1, dans laquelle le chargeur (2) est fourni avec une clé USB extensible (8) pour recevoir de la puissance à partir d'une source USB sur de l'équipement externe facultatif, tel qu'un ordinateur ou un adaptateur USB branché dans une sortie de mur à courant alternatif.

6. Combinaison selon l'une quelconque des revendications précédentes, dans laquelle un dispositif de lampe (3) est adapté pour interconnecter physiquement avec le chargeur (2) en ayant une face arrière profilée (3b) faisant face au chargeur (2) qui montre un profil conjuguant, et dans laquelle une coupe transversale du profil de la lampe est en forme d'un C étant capable d'être encastrée sur une douille de lampe de bicyclette plate ou similaire; le chargeur (2) ayant des premiers contacts portant en saillie (13) à l'opposé des deuxième contacts correspondants (14) qui sont retirés des surfaces intérieures des extrémités pliées du profil en forme de C, fournissant ainsi une connexion électrique entre les premier et deuxième contacts (13, 14).

7. Combinaison selon l'une quelconque des revendications précédentes, dans laquelle la source émettrice de lumière comprend des diodes à émission de lumière incorporées (4), par exemple des diodes montées en surface ou des diodes émettrices de lumière dans une surface avant (3a) d'une lampe (3) faisant face vers l'extérieur à partir de la combinaison (1), qui servent à émettre de la lumière lorsque la combinaison (1) est démontée, et qui servent de lumière indicateur pour l'état de chargement de batterie lorsque la combinaison est démontée et le chargeur (2) est connecté à une alimentation électrique.

8. Combinaison selon l'une quelconque des revendications précédentes, dans laquelle le chargeur (2) comprend des circuits de chargement individuels pour les dispositifs de lampe (3) qui y sont fixés.

9. Combinaison selon l'une quelconque des revendications précédentes, dans laquelle un premier dispositif de lumière (3) comprend des diodes (4) qui émettent une lumière blanche, et un deuxième dispositif de lumière (3) comprend des diodes (4) qui émettent une lumière rouge afin d'agir comme un propre ensemble de lampes avant et arrière de bicyclette (3).

10. Combinaison selon l'une quelconque des revendications précédentes, dans laquelle les diodes (4) dans chaque lampe (3) sont capables de fournir une différente couleur, une différente intensité de lumière et une différente vitesse de clignotement indiquant l'état du chargement.

11. Combinaison selon l'une quelconque des revendications précédentes, dans laquelle la longueur du guide ou du moyen de fixation (10) fait la moitié de la hauteur d'un dispositif de la lampe (3) de manière à ce que les dispositifs de lampes (3) puissent glisser de manière facile le long des deux surfaces plates du chargeur (2) l'une après l'autre jusqu'à l'état assemblé, et la clé USB (8) prenant la forme d'une porte rectangulaire articulée (17) le long d'un bord court de la paroi protectrice (16) du chargeur (2).

12. Combinaison selon l'une quelconque des revendications 5 à 11, ayant le chargeur de batterie (2) et les deux dispositifs de lampes autonomes (3) ayant des sources émettrices de lumière incorporées (4) et une batterie rechargeable, dans laquelle le chargeur (2) a des moyens de connexion (8) pour recevoir de la puissance d'une alimentation électrique, et dans laquelle les dispositifs de lampe (3) sont fournies avec des moyens de fixation (10) adaptés à être fixés à une douille de lampe d'une bicyclette par exemple, **caractérisée en ce que** la moitié de la longueur du guide ou du moyen de fixation (10) sur chaque dispositif de lampe (3) est coupée de manière à ce que les dispositifs de lampe (3) peuvent glisser en alignement en contact de surface direct l'un avec l'autre et où au moins l'un d'entre eux ont le chargeur (2) dans la forme d'un circuit de chargement encastré et la clé USB (8) prend la forme d'une porte rectangulaire articulée (17) le long d'un bord court de l'un des dispositifs de lampe.

13. Utilisation de la combinaison selon l'une quelconque des revendications précédentes avec un anneau pour clefs (6), où la combinaison (1) est fournie avec un oeillet (5) pour ledit anneau (6).

14. Utilisation de la combinaison selon l'une quelconque des revendications précédentes, où une mémoire non volatile est fournie.
